# EUROPEAN PATENT APPLICATION

(11) **EP 0 744 693 A1**
(43) Date of publication of application: **27.11.1996**
(21) Application number: 96107022.4
(22) Date of filing: 03.05.1996
(51) Int. Cl.: G06F 11/00, B61L 3/00

(54) **Method and system for fail-safe error checking by providing plural series of check orders**

(30) Priority: 09.05.1995 JP 110505/95
(71) Applicant: HITACHI, LTD., Chiyoda-ku, Tokyo 101 (JP)
(72) Inventor: Nagatsugu, Yoshihide, Hitachinaka-shi, Ibaraki 312 (JP); Noumi, Makoto, Hitachinaka-shi, Ibaraki 312 (JP)
(74) Representative: Strehl Schübel-Hopf Groening & Partner

(57) **Abstract**

In order to realize fail-safe data checking including failure detection of a checking circuit itself by using a common non-fail-safe theory but not using a special theory for checking theory circuit, check codes are added to calculation processed results using two different check code producing means, and the two calculation processed results having the check codes are alternatingly input to the two checking means corresponding to the check codes, thereby the checked result is alternated.

## Description

### Background of the Invention

The present invention relates to a method of checking an error and a system thereof used in a controller utilizing a micro-computer, and more particularly to a method of checking an error and a system thereof suitable for a controller requiring fail-safe capability such as a controller for a rail car.

When an error control due to erroneous data is performed in rail car control, there is some possibility to cause an accident in relation to human life. Therefore, the controller for a rail car is required to have fail-safe function, and it is required to insure the rightness of input-output data and calculation processing.

As to means for insuring the rightness of input-output data in a process of data transmission, there is a widely used method of detecting transmission error in which a check code is added to a transmission data at transmitter side and the check code and the transmission data are checked at a receiver side. As to the check code, parity bit or CRC (cyclic redundancy check) is commonly used.

On the other hand, as to means for insuring the rightness of processing itself, most of systems requiring fail-safe function employs a method in which the processing system is constructed by multiple-system, and abnormality in processing is detected by checking processed results of the multiple-system and finding an inconsistency in the checked result.

As to the data checking method in the above case, there are a hardware-approaching method represented by a bus checking method and a software-approaching method disclosed in Japanese Patent Application Laid-Open No.60-233734 (1985) where an inconsistency of processing is detected by checking a CRC code added to processed result in each series.

In such a conventional technology, there are some cases where checked result is always fixed to "no error" side due to occurrence of abnormality in the checking means itself. Accordingly, this cannot be a perfect fail-safe function. Therefore, in checking in a double-system, a method capable of detecting failures including failure of the checking circuit itself is practically used by using a special fail-safe theory. However, since the theory is special, the circuit becomes complex and large in size, and consequently problems occurs in reliability and processing speed.

On the other hand, when checking is performed by software, it is possible to make the system simple and the processing speed fast. However, there is a problem in fail-safe capability at a software runaway.

In data transmission where data error is detected not by constructing multi-system but by checking data and check code, failure of the checker itself is not taken into consideration.

### Summary of the Invention

An object of the present invention is to realize fail-safe data checking including failure detection of a checking circuit itself using a common non-fail-safe theory but not using a special theory for checking theory circuit.

In order to attain the above object, according to the present invention, check codes are added to calculation processed results using two different check code producing means, and the two calculation processed results having the check codes are alternatingly input to the two checking means corresponding to the check codes. By doing so, the checked result is alternated.

In the above construction, when data is normal, the checked result becomes an alternating signal in which "no error" and "error" are alternatingly appear. When one checked result is "no error", the other checked result becomes "error".

When data is abnormal, both of checked results of the two checking means becomes "error" and not become alternating signals. When the checking means itself is abnormal, the judged result is fixed to either of "no error" and "error". Therefore, at least one of the two checked results is stopped to alternate. Thereby, it is possible to detect abnormality in the processing or abnormality in the checking means.

### BRIEF DESCRIPTION OF THE DRAWINGS

FIG.1 is a block diagram showing an embodiment of the construction of a rail car controller in accordance with the present invention.

FIG.2 is a block diagram showing an embodiment of the construction of a data processor (FS-CPU) and a speed controller (FS-IOU).

FIG.3 is a block diagram showing an embodiment of the functional construction of a rail car controller in accordance with the present invention.

FIG.4 is a block diagram showing the detailed construction of a data processor (FS-CPU).

FIG.5 is a process flow chart in a data processor (FS-CPU) in accordance with the present invention.

FIG.6 is a schematic diagram of CRC code exchanging process in accordance with the present invention.

FIG.7 is a block diagram showing the detailed construction of a speed controller (FS-IOU) in accordance with the present invention.

FIG.8 is a process flow chart in a speed controller (FS-IOU) in accordance with the present invention.

FIG.9 is a diagram showing the construction of a data checking circuit in accordance with the present invention.

FIG.10 is a time chart showing the operation of an output register in accordance with the present invention.

FIG.11 is a time chart showing the operation of the alternating AND circuit when an inconsistency in processing or an error in data transmission occurs in accordance with the present invention.

FIG.12 is a time chart showing the operation of the alternating AND circuit when an abnormality in a checking program occurs in accordance with the present invention.

FIG.13 is a time chart showing the operation of the alternating AND circuit when output data from the data processor (FS-CPU) is fixed in accordance with the present invention.

### Detailed Description of the preferred Embodiments

An embodiment of the present invention will be described in detail below, referring to the accompanying drawings.

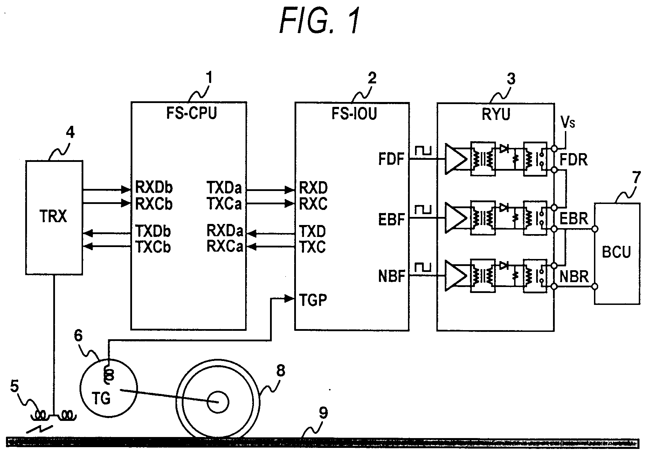

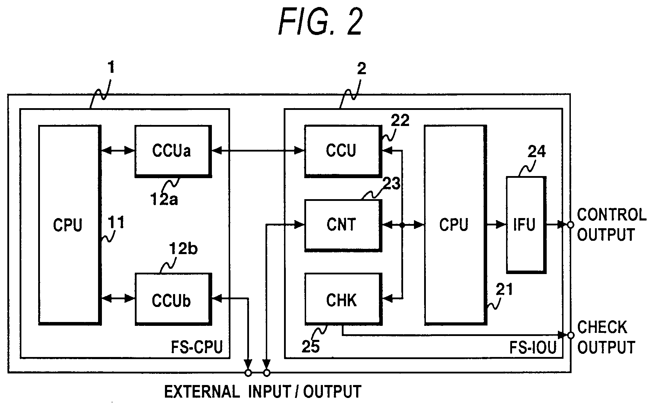

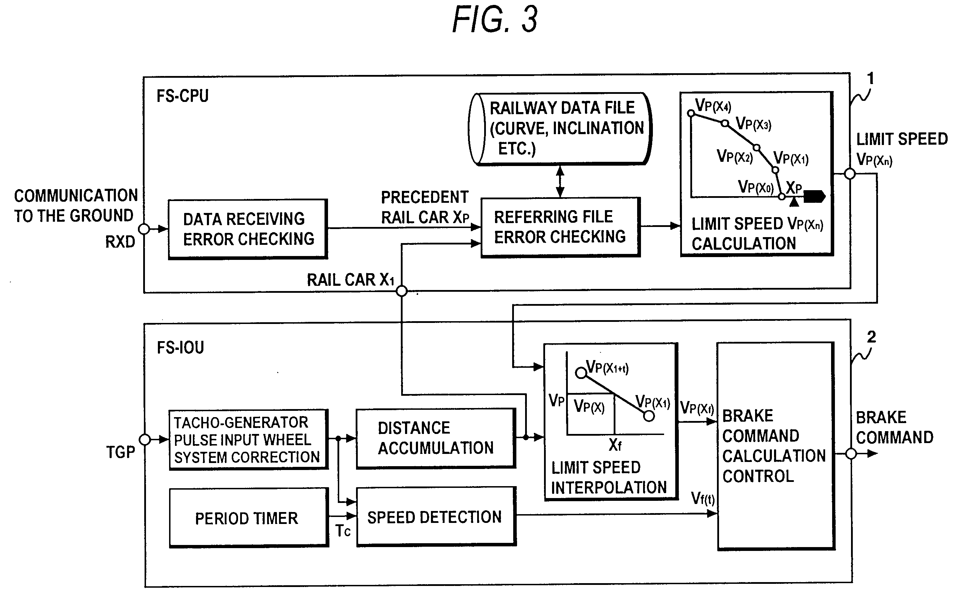

FIG.1 is a block diagram showing the construction of a rail car controller mounted on the rail car to which a data error check system in accordance with the present invention is applied. FIG.2 is a block diagram showing the internal construction of a data processor (FS-CPU) 1 and a speed controller (FS-IOU) 2. FIG.3 is a block diagram showing the functional construction of the rail car controller of the present embodiment.

The data processor (FS-CPU) 1 receives information on a position of the precedent rail car, a limit speed of the section ahead of the rail car from a ground in input ports RXDb, RXCb, and outputs the limit speed information from data processed output ports TXDa, TXCa to input ports RXD, RXC of the speed controller (FS-IOU) 2.

Data on positional information of the precedent rail car, a limit speed in the section ahead of the rail car and so on are transmitted to the input port RXDb of the data processor 1, and a transmission synchronizing clock signal is transmitted to the input port RXCb. Further, the limit speed is transmitted to the input port RXD of the speed controller, and the transmission clock signal is transmitted to the input port RXC.

A relay unit (RYU) 3 operates a failure detection relay FDR, an emergency brake relay EBR and a normal brake relay NBR corresponding to a failure detection signal FDF, an emergency brake signal EBF and a normal brake signal NBF output from the speed controller 2.

A signal communication transmitter/receiver (TRX) 4 inputs information transmitted from the ground through a receiving antenna 5 to the data controller 1. A tacho-generator (TG) 6 inputs a signal on a rotational speed of the wheel to the input port TGP of the speed controller 2 to calculate a travelling distance and a speed of the rail car. A brake control unit (BCU) 7 brakes a wheel 8 to stop the rail car using a frictional force with a rail 9 corresponding to an output of the emergency brake relay EBR or the normal brake relay NBR.

The position information of the precedent rail car (conventional rail way circuit) is periodically transmitted from a signal communication system (not shown) installed on the ground through the rail 9, and the data is received by the receiving antenna 5 and the transmitter/receiver 4 to input to the input ports RXDb, RXCb of the data controller 1. Data on the positional information of the precedent rail car, the limit speed in the section ahead of the rail car and so on are transmitted to the input port RXDb, and the transmission synchronizing clock signal is transmitted to the input port RXCb.

On the other hand, distance pulses detected by the tacho-generator 6 mounted on the wheel shaft of the wheel 8 are input to the input port TGP of the speed controller 2. The pulses are corrected by a tacho-generator input wheel-diameter correction unit, and then accumulated in a distance calculation unit to calculate a own present position of the rail-car, as shown in FIG.3.

The own positional information of the rail-car is transmitted to a limit speed interpolation unit, and is also transmitted to the input ports RXDa, RXCa of the data processor (FS-CPU) 1 through the output ports TXD, TXC. The data is input to the input port RXAa, and the transmission synchronization clock signal is input to the input port RXCa. The information on the position is transmitted to the following rail car through the output port TXDb, and the transmission synchronization clock signal is transmitted to the following rail car through the output port TXCb and the signal communication transmitter/receiver (TRX).

The limit speed interpolation unit of the limit speed controller 2 calculate a limit speed using the transmission synchronization clock transmitted to the input port RXC and the speed limit information supplied to the input port RXD and the own position of the rail car. The speed detection unit calculates a present travelling speed using the distance pulses and an output from a period timer. A brake command calculation control unit compares the own speed of the rail car with the limit speed. If it exceeds the limit speed, the brake command calculation control unit outputs a brake command and controls the brake unit 7 through the relay unit 3 so as to travel the rail car safely.

As shown in FIG.3, after receiving the information on the position of the precedent rail car, the limit speed in the section ahead of the rail car and so on, the speed controller (FS-CPU) 1 checks the information with a data receiving error check unit, and shares calculation of a limit speed pattern based on a own positional information of the rail car Xf, rail-way data and so on.

The speed controller (FS-IOU) 2 shares calculation of an instant brake control command based on the limit speed pattern. Herein, the reference character NBF indicates a normal brake command and the reference character EBF indicates an emergency brake command. When the controller is failed, a failure detection command FDR for the controller is generated.

The speed controller 2 transmits information on the position of the own rail car to the following rail car through the output ports TXD, TXC, the input ports RXDa, RXCa of the data processor 1 and the output ports TXDa, TXCa.

The relay unit (RYU) 3 shares alternating current amplification of the alternating current brake command and rectification of the alternating current brake command. Here, the reason why the brake command is alternated is that, in order to prevent the output of the controller or the relay drive circuit from being unsafely fixed to the brake releasing side by a failure, a fail-safe function is maintained by determining an alternating current signal as a brake releasing command and a stoppage of alternating current as a brake action command so that the command becomes in the stoppage of alternating current of the brake action side at a failure. This method is conventionally employed.

After receiving the information on the position of the precedent rail car, the limit speed in the section ahead of the rail car and so on from the ground, the speed controller (FS-CPU) 1 checks presence or absence of errors in the information using the data receiving error check unit. If there is no error, the data processor checks the data referring to a rail-way data file storing inclination information of the rail-way in the section between the position of the precedent rail car Xp and the position of the own rail car Xf and speed limit information such as curves, branchings and then calculates a limit speed pattern Vp(Xi) for driving the rail car so as to not bump into the precedent rail car and not exceed the speed limits in the section based on the data.

Therein, the inclination information is used to calculate an effective deceleration of the rail car. Xi is an inflection point of the pattern due to inclination change, speed limit and so on, and Vp(Xi) is a speed limit at that point. A limit speed pattern series (Vp(X0), Vp(X1), ...Vp(Xn)) calculated in such a way is transmitted to the speed controller (FS-IOU) 2 through the output ports TXDa, TXCa. The pattern data calculation process in the data processor (FS-CPU) 1 is doubled in order to execute the processing without error, although this is not illustrated in the figure.

On the other hand, the distance pulses detected by the tacho-generator 6 installed in the wheel shaft of the wheel 8 are input to the input port TGP of the speed controller 2. The pulses are corrected by a tacho-generator input wheel-diameter correction unit, and then accumulated in a distance calculation unit to calculate a own present position of the rail-car. the speed controller (FS-IOU) 2 calculates the own present position of the rail-car Xf(t) by accumulating the pulses as described above and, at the same time, also calculates a own speed of the rail car Vf(t) which is time derivative of the own present position of the rail-car.

Based on the own present position of the rail-car Xf(t) and the limit speed pattern series (Vp(X0), Vp(X1), ...Vp(Xn)) received from the data processor (FS-CPU) 1, the speed controller (FS-IOU) 2 selects a pair of limit speed patterns Vp(Xi), Vp(Xi-1), Xi<Xf<Xi-1, that is, in a section including the own position of the rail car, and then calculates a limit speed Vp(Xf) at Xf by interpolating the section.

The limit speed Vp(Xf) is compared with the present speed of the rail car Vf(t) in the brake command calculation control unit. As a result, if Vf>Vp, a normal brake command is output to the output port NBR. Further, if Vf>Vp+α (α is a constant: for example, 5 km/h), an emergency brake command is output to the output port EBR. In this time, the brake command finally output is output in a form of an alternating current signal. A fail-safe function is maintained by determining an alternating current signal as a brake releasing command and a stoppage of alternating current as a brake action command so that the command becomes in the stoppage of alternating current of the brake action side at a failure.

In a system where the rail-way condition is stored as data in a on-car unit and control is performed based on the data as described above, there is a possibility to cause a rail car collision in a worst case when control is executed by using an erroneous speed pattern. Since error of one bit in the pattern data changes the data to a completely different one, the calculation processing of the pattern data and the communication between the data processor (FS-CPU) 1 and the speed controller (FS-IOU) 2 should be certainly performed.

Therefore, a fail-safe function is provided to the pattern data calculation processing and the data transmission by making the processing in the processor FS-CPU doubled and by using a data checking method according to the present invention in the communication between the data processor (SF-CPU) 1 and the speed controller (SF-IOU) 2.

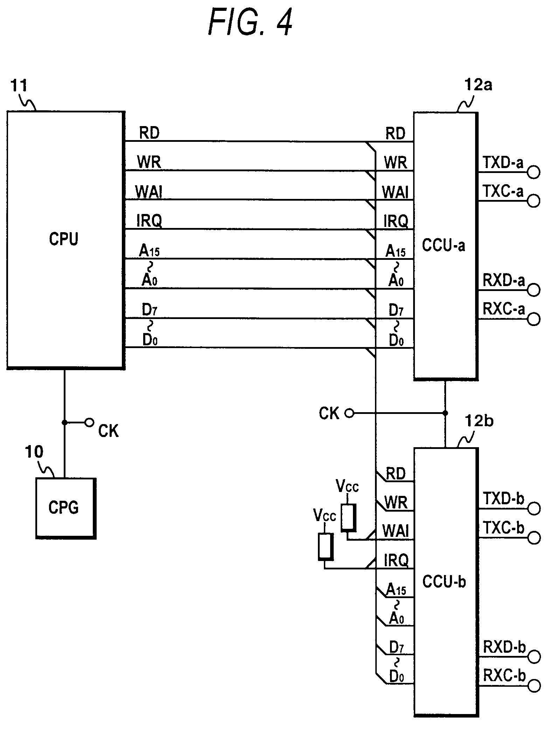

FIG.4 is shows the construction of the data processor FS-CPU. A central processor unit (CPU) 11 is operated by a clock generator CPG 10. Serial communication control circuits (hereinafter, referred to as CCUa, CCUb) 12a, 12b are connected to the speed controller (FS-IOU) 2 the controller and the circuit such as the transmitter/ receiver for the ground unit and so on.

Although the construction in the figure has two ports, the number is arbitrary, and it may be possible to provide an external bus interface which is omitted in this embodiment.

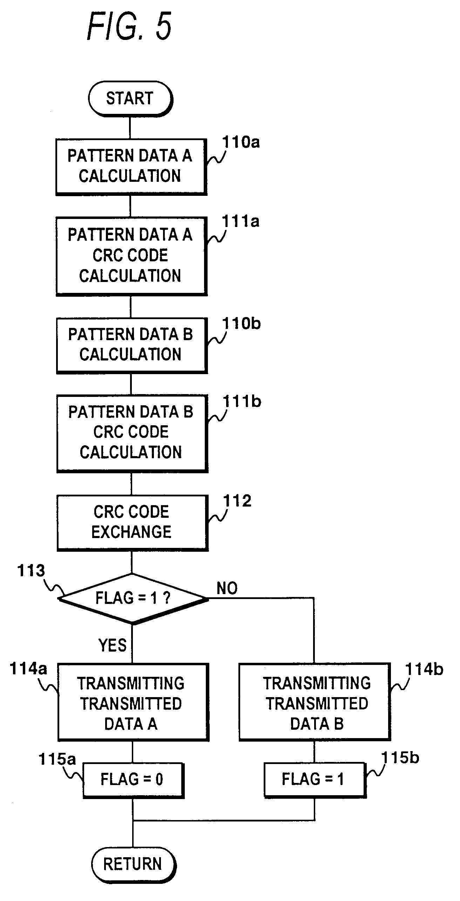

FIG.5 is a process flow chart showing the processing in the data processor (FS-CPU) shown in FIG.2. In Step 110a, a pattern data A 1100a is calculated by a program A. In Step 111a, similarly a CRC code A 1110a is calculated the program A. The series of CRC codes calculated here is called as "series 0".

In Step 110b, a pattern data B 1100b is calculated by a program B. The program B has the same function as but different from the program A. By doing so, it is prevented for the two programs to make the same error at the same time. In Step 111b, similarly a CRC code B 1110b is calculated the program B. The series of the CRC codes B calculated here (hereinafter, referred to as "series 1") is different from the series of CRC codes A calculated by the program A.

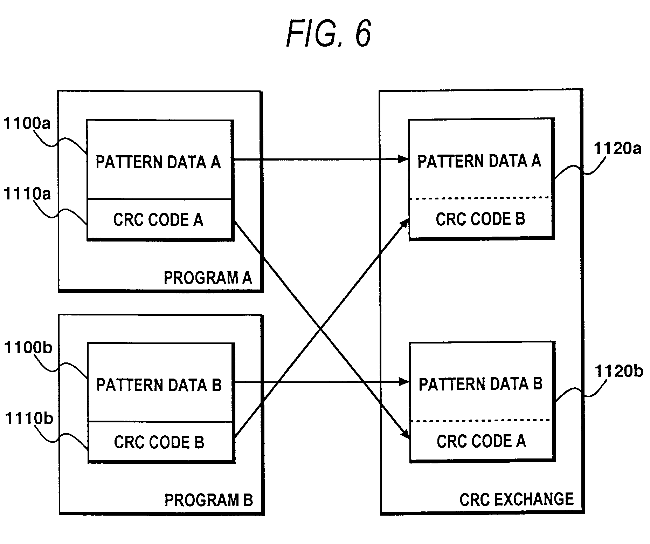

In Step 112, a processing to exchange the CRC codes between the calculated results by the programs A and B. Herein, as shown in FIG.6, the data combined the pattern data A 1100a with the CRC codes B 1110b is called as transferred data A 1120a, and the data combined the pattern data B 1100b with the CRC codes A 1110a is called as transferred data B 1120b.

Incidentally, FIG.6 shows the outline of the processing in Step 112. In Step 113, data switching flag FLAG is judged. If FLAG=1, transmitting process for the transmitted data A is executed in Step 114a and then the flag is reset as FLAG=0 in Step 115a. If FLAG=0, transmitting process for the transmitted data B is executed in Step 114b and then the flag is reset as FLAG=1 in Step 115b. Therefore, the transferred data A and the transferred data B are alternatingly transmitted from the data processor (FS-CPU) ever calculation cycle.

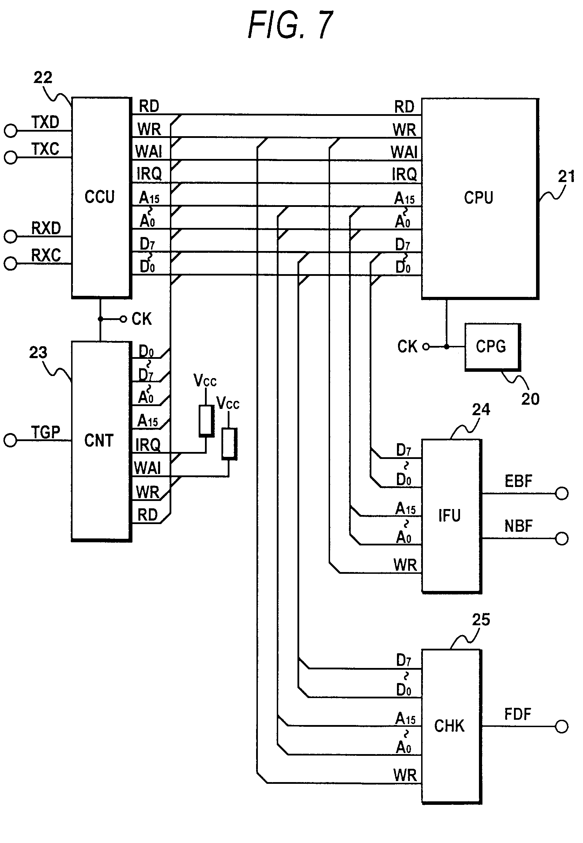

FIG.7 is a block diagram showing the detailed construction of the speed controller (FS-IOU) 2. The speed controller FS-IOU is composed of a central process unit (CPU) 21, a clock pulse generator 20 for driving the CPU 21, a serial communication control circuit CCU 22 for connecting the data processor FS-CPU 1 and other control units and circuits, a pulse counter (CNT) 23 for counting distance pulses from the tacho-generator to calculate a present position and a speed of the rail car, an output interface circuit (IFU) 24 for performing signal conversion of a brake command calculated by the CPU to supply to the relay unit RYU, and a data checking circuit (CHK) 25.

Each of the units has terminals for a read signal RD, a write signal WR, a temporary stop signal, an interrupt signa 1WAI, address signals A15 to A0, data buses D0 to D7. In the central processing unit CPU 21 in the speed controller (FS-IOU) 2, before executing brake command calculation, the transferred data form the data processor (FS-CPU) 1 is checked.

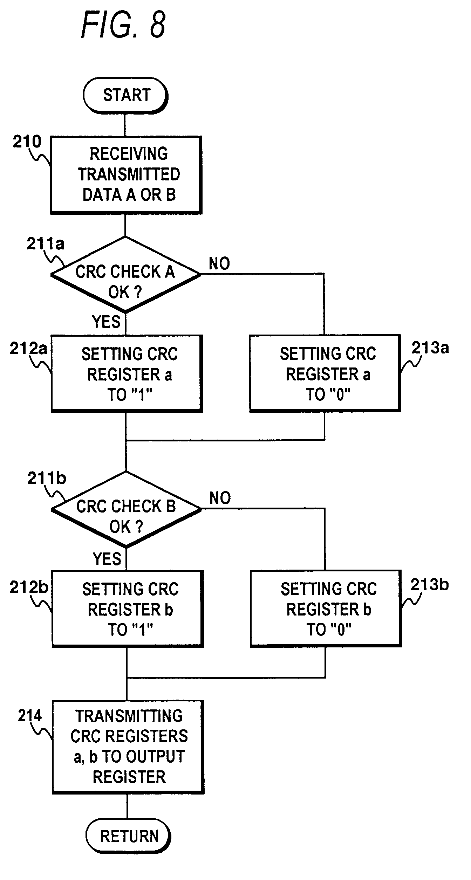

FIG.8 is a process flow chart for transmitted data checking. In Step 210, receiving process for the transmitted data (A or B) from the data processor (FS-CPU) 1 is executed.

In Step 211, CRC check for the transmitted data with the "series 0" CRC code is performed using a check program A. Herein, if the check result is "no error", the CRC register a is set to 1 (one) in Step 212a. If the check result is "error", the CRC register a is set to 0 (zero) in Step 213a.

In this embodiment, a special 1 (one) byte in a memory of the CPU is allocated as the CRC register, and the lowest level (the 0-th) bit is used as the CRC register a. In Step 211b, CRC check for the transmitted data with the "series 1" CRC code is performed using a check program B. Herein, if the check result is "no error", the CRC register b is set to 1 (one) in Step 212b. If the check result is "error", the CRC register b is set to 0 (zero) in Step 213b.

As the CRC register b, the 1st bit of the above CRC register is used. In Step 214, process to transmit the contents of the CRC register a, b to an output register (REG) 252 in the data checking circuit (CHK) 25 is performed.

After completion of these processes, the CPU 21 executes brake command calculation based on the pattern data, and the result is transmitted to the output interface circuit (IFU) 24.

In a case where the pattern data calculated results by the two programs in the data processor (FS-CPU) 1 are the same, when the transmitted data A with CRC code B is CRC-checked by the check program B, the check result becomes "no error" and the CRC register b is set to 1.

On the other hand, when the transmitted data B with CRC code A is CRC-checked by the check program A, the check result becomes "no error" and the CRC register a is set to 1. This is because since the CRC codes a, b are generated for the same data, the CRC code matches to a pattern data a (or b) even if the CRC codes are exchanged.

On the contrary, when the transmitted data A with CRC code B is CRC-checked by the check program A, the check result always becomes "error" because of difference of the CRC series regardless of the content of the transmitted data and the CRC register a is set to 0.

On the other hand, when the transmitted data B with CRC code A is CRC-checked by the check program B, the check result always becomes "error" because of difference of the CRC series regardless of the content of the transmitted data and the CRC register a (b) is set to 0. Since the transmitted data a and the transmitted data b are transmitted alternatingly from the data processor (FS-CPU) 1, 1 (one) and 0 (zero) are alternatingly written in the CRC registers a and b ever calculation cycle. Further, the contents of the CRC register a and b are reversed to each other, and there is no chance that both of them have 1 (one) or 0 (zero) at the same time.

A case where the two processed results in the data processor (SF-CPU) 1 are inconsistent will be discussed below. In this case, the checked result of the transmitted data A (or B) by the program B (or A) becomes "error" since the data is not corresponding to the CRC code, and the CRC register b (or a) is set to 0 (zero). On the other hand, in this case, the content of the CRC register b (or a) is 0 (zero), as described above. Therefore, the both contents of the CRC registers a and b become 0(zero) at the same time.

When an error occurs in a data transmitting process, the check result of the transmitted data A (or B) by the program B (or A) becomes "error" since an error is in the data, and the CRC register b (or a) is set to 0 (zero). Therefore, the both contents of the CRC registers a and b become 0 (zero) at the same tim also in this case.

When an abnormality occurs in the CPU 21 or the check program in the CPU, the result of the CRC check is fixed to either of "no error" or "error", or these are appear in random.

When output to the speed controller (FS-IOU) 2 is fixed to the transmitted data a (or b) due to abnormality of the central processing unit (CPU) 21 in the data processor (FS-CPU) 1 or a program in the CPU, the content of the CRC register b is fixed to 1 (or 0).

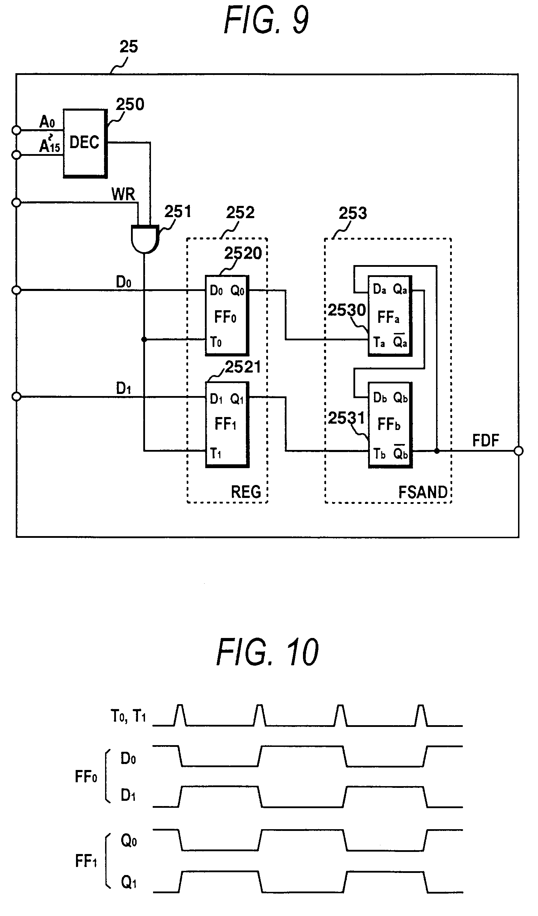

FIG.9 is a diagram showing the internal construction of the data checking circuit (CHK) 25. an AND gate 251 makes AND of an output of an address decoder (DEC) 250 and a write signal WR of the CPU 21. An output register REG 252 is composed of two flip-flops FF), FF1 in which contents of the CRC registers a, b are written, respectively. FIG.10 shows the output time chart of the FF0, FF1 in a normal state.

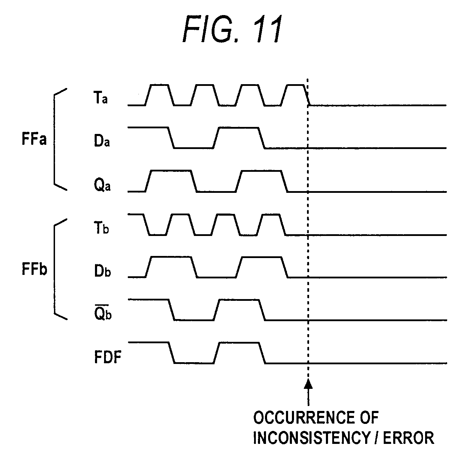

An alternating AND circuit (FSAND) 253 is constructed by combining two of a flip-flop (FFa) 2530 and a flip-flop (FFb) 2531 as shown in the figure. The checked output FDF becomes an alternating signal only when the both input signals Ta and Tb are alternating signals and the phases are reversed to each other. FIG. 11 to FIG. 13 are operating time charts of the FSAND.

FIG.11 is a time chart showing the operation of the alternating AND circuit when an inconsistency occurs in a calculation processing in the data processor (fs-CPU) or an error occurs in a data transmission process. Since input Ta and Tb become 0 (zero) at the same time when the inconsistency or the error occurs, the alternation of the check output FDF is stopped.

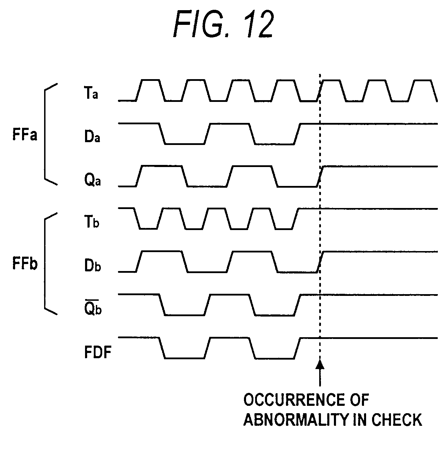

FIG.12 is a time chart showing the operation of the alternating AND circuit when an abnormality occurs in a checking program. In this case, the alternation of the check output FDF is stopped at the time when the both inputs Ta and Tb become 1 or 0 at the same time after the abnormality occurs. The figure shows a case where an abnormality occurs in the program A and the output is fixed to 1 (one), but the same can be said in a case where the output is fixed to 0 or in a case where an abnormality occurs in the program B.

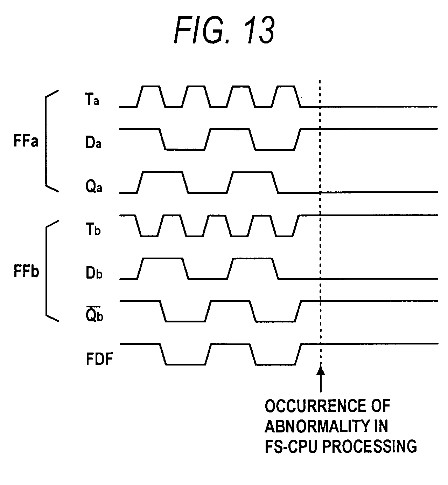

FIG.13 is a time chart showing the operation of the alternating AND circuit when an output from the data processor (FS-CPU) is fixed to the transmitted data a. In this case, the alternation of the check output FDF is stopped at the time when the transmitted data is fixed. The same can be said in a case where the output from the data processor (FS-CPU) is fixed to the transmitted data b.

As described above, in all cases where an inconsistency occurs in the process in the data processor (FS-CPU), where an error occurs in the data transmission process, where an abnormality occurs in the check program, and where the output data from the data processor (FS-CPU) is fixed, the alternation of the check output FDF from the FSAND is stopped and therefore the abnormality can be certainly detected.

The failure detection relay FDR in the relay unit RYU is driven by the check output FDF from the FSAND, and when the alternation of the FDF is stopped, the coil of the FDR is deenergized and an emergency brake command is output to the brake unit BCU by opening the contact point. Therefore, in all cases where an error occurs in the data transmission process, where a failure occurs in the CRC checker and where the output data from the data processor (FS-CPU) is fixed, the emergency brake is operated and consequently fail-safe capability can be attained.

The CRC code is used for the check code in this embodiment, but the other code may be used. The CRC check in this embodiment is performed using software, but it is no need to say that the CRC check may be performed by hardware. It may be also possible that the two processes are performed in a single hardware or performed by being separated to other hardware.

In a case where an object is to find an error only in the data transmission process, the calculation processing is executed using one program, and two check code generating programs are used by switching every calculation cycle. By doing so, the check result can be changed to an alternating signal.

As having been described above, according to the present invention, by using two checking means corresponding to different check codes and by alternating the checked result by alternatively input the check codes to the checking means, a fail-safe checking can be realized without using any special fail-safe theory. Thereby, the checking theory is simplified and a system employing the fail-safe checking can be made small in size and high in reliability.

## Claims

1. An error checking method comprising the steps of
performing calculation processes of the same contents of processing to the same data by different methods,
producing two independent series of check codes for said two calculation processed results respectively, and
checking the calculation processed results according to the corresponding methods of the respective series after exchanging said series of check code between the series.

2. An error checking system comprising,
two calculation processing means for performing the same contents of processing to the same data,
two check code producing means for independently producing two check codes for two calculation processed results of said two calculation processing means respectively, and
two checking means corresponding to said check code producing means, the calculation processed results being checked by being supplied to said checking means after exchanging said series of check code between the series.

3. An error checking system according to claim 2, wherein
said two check code producing means produces check codes different from each other to the two calculation processed results,
said checking means performing checking according to said check codes respectively, and
the two calculation processed results being supplied to the both checking means after exchanging the check codes between the both series every calculation cycle.

4. An error checking system comprising,
two calculation processing means for performing the same contents of processing to the same data,
check code producing means to the calculation processed result,
checking means corresponding to sad check code,
two check code producing means for producing two different check codes, and
two checking means corresponding to said check codes, the calculation processed result added with one check code produced by one checking code producing means between said check code producing means and the calculation processed result added with the other check code produced by the other check code producing means being alternatively supplied to said both checking means every calculation cycle.

5. An error checking system comprising,
two calculation processing means for performing the same contents of processing to the same data,
two check code producing means for independently producing two check codes for two calculation processed results of said two calculation processing means respectively,
a first calculation processor having check code exchanging means for exchanging said check codes between the both series, and
a second calculation processor having checking means corresponding to said check code, an processing error of the first calculation processor and a communication error being detected by performing communication under a condition that said first calculation processor is used as a transmitter and said second calculation processor is used as a receiver.
